# EUROPEAN PATENT APPLICATION

(11) **EP 1 320 058 A1**
(43) Date of publication of application: **18.06.2003**
(21) Application number: 02258561.6
(22) Date of filing: 11.12.2002
(51) Int. Cl.: G06F 17/60

(54) **Systems and methods for durable goods futures market**

(30) Priority: 17.12.2001 US 22664
(71) Applicant: CFPH, L.L.C., New York, NY 10019 (US)
(72) Inventor: Ginsberg, Philip M., Eastville, Virginia 23347 (US)
(74) Representative: Jones, David Colin

(57) **Abstract**

Systems and methods for buying and selling durable good futures contracts on a futures market trading interface is provided. The futures market trading interface provides a trader with an ability (i.e., a buyer or a seller) to establish, monitor and control a durable good futures contract. The trading interface may provide options to buy and/or sell a durable good futures contract. In addition, the trading interface may provide options for monitoring relevant futures market information and activity for the durable good futures contract.

## Description

### Background of the Invention

The present invention is systems and methods for buying and selling durable goods. More particularly, the present invention relates to systems and methods for enabling traders to buy and sell ownership of durable goods in a futures market.

Durable goods, also known as hard goods, are goods that are typically used repeatedly over a period of years. Such goods sustain a financial value over a long period of time. A durable good may be an automobile, a boat, a plane, household appliances, or any other applicable good.

In a durable goods marketplace a trader (i.e., a buyer or a seller) can buy or sell ownership of a durable good. In determining to buy or sell a durable good, it is important that the trader be able to evaluate a variety of trading factors pertaining to his or her good. Efficient access to trading factors serves an important role in a trader's trading environment and may ultimately determine how the trader will control his or her trading decisions.

Another important aspect in various trading environments is stability. In trading durable goods, or any good for that matter, assurance may promote stability in a trader's trading environment. A trader of durable goods may be more likely to trade when he or she has some level of assurance that a decision to buy or sell a durable good made during a present time will not prove to be a financial loss at a future point in time. For example, an owner of a durable good may know that a few years into the future he or she will want to sell ownership of the durable good. The owner, acting as a seller at a future point in time, would like assurance that he or she will be able to sell the durable good for an expected future price. The owner, at a present time period, may be able to estimate the expected future price for the durable good but he or she is not guaranteed that a buyer in the future will purchase at this price. Furthermore, there are no guarantees that the expected future price will be the actual price in the future.

Current systems and methods fail to provide the access to trading factors and stability in a durable goods marketplace. In view of the foregoing, it would be desirable to provide systems and methods in a trader's marketplace for the buying and the selling of durable goods.

### Summary of the Invention

It is an object of this invention to provide systems and methods, preferably for implementation in a trader's marketplace, for buying and selling durable goods.

In accordance with this and other objects of the invention, a futures market trading interface is provided to allow a trader (i.e., a buyer or a seller) to establish, monitor and control a durable good futures contract. More particularly, in accordance with this invention, the trading interface may incorporate various options to provide the trader with an ability to buy and sell a durable good futures contract and to efficiently monitor relevant futures market information for the durable good futures contract.

The trading interface may allow a trader to execute a variety of futures contract options. Options may include searching and buying an available durable good futures contract, posting and selling an available durable good futures contract, processing cash settlements, displaying a history of index values for a durable good, and customize monitoring of futures market information.

In monitoring futures market information for a durable good, the trader may inquire about activity relevant to the durable good and view factors that may effect a price value of the durable good through the trading interface. Futures market information may provide the trader with insight on the performance of a particular durable good and thus allow the trader to efficiently execute options relevant to his or her durable good futures contract. The trading interface may provide performance monitors, information links, or any other applicable source of futures market information.

As will be apparent upon reading the Detailed Description of the Preferred Embodiments, various features of the present invention may be implemented with any type of trading interface for the buying and selling of durable goods futures contracts.

### Brief Description of the Drawings

Further features of the invention, its nature and numerous advantages will be more apparent from the following detailed description of the preferred embodiments, taken in conjunction with the accompanying drawings, in which like reference characters refer to like parts throughout, and in which:
FIG. 1 is a block diagram of a system that may be used to implement the processes and functions illustrated in FIGS. 2-11 in accordance with certain-embodiments of the present invention;
FIG. 2 is an illustrative login display in accordance with certain embodiments of the present invention;
FIG. 3 is an illustrative main menu display in accordance with certain embodiments of the present invention;
FIGS. 4A and 4B are illustrative durable good search and post displays, respectively, in accordance with certain embodiments of the present invention;
FIG. 5 is an illustrative durable good search results display in accordance with certain embodiments of the present invention;
FIG. 6 is an illustrative durable goods selection display in accordance with certain embodiments of the present invention;
FIG. 7 is an illustrative futures contract trader agreement display in accordance with certain embodiments of the present invention;
FIG. 8 is an illustrative futures contract control panel display in accordance with certain embodiments of the present invention;
FIG. 9 is a flow diagram of selling a durable good futures contract in accordance with certain embodiments of the present invention;
FIG. 10 is a flow diagram of buying a durable good futures contract in accordance with certain embodiments of the present invention;
and FIG. 11 is a flow diagram of monitoring a durable good in accordance with certain embodiments of the present invention.

### Detailed Description of the Preferred Embodiments

The present invention provides a futures market trading interface that allows a trader (i.e., a buyer or a seller) to buy and sell a futures contract for a durable good.

In a futures contract according to the invention, a buyer and a seller establish an agreement to exchange ownership of a durable good for a price at a time designated in the future. When a futures contract is established between the buyer and the seller, the buyer is committed to buying the durable good at the contracted price upon expiration of the contract. Upon expiration of the futures contract, the buyer takes ownership of the durable good. However, futures contracts are usually not held to their expiration. The trader may not actually want to own the durable good, but instead collect a profit from its ownership. For example, a buyer may choose to purchase a durable good futures contract for a specific price. If the value of the durable good increases, the buyer may establish a futures contract with another buyer in order to acquire a potential profit. Likewise, if the value of the durable good decreases, the buyer may establish a futures contract with another buyer in order to avoid a potential loss.

Traders may offset a futures contract in order to maximize profit or minimize a loss. Offsetting is squaring your futures position by entering an equal but opposite trade prior to the expiration of your contract. For example, if a trader previously was a buyer of a futures contract then the trader engages himself or herself in a sell position to make a new futures contract, for the same durable good, available to another buyer. By offsetting a futures contract, the buyer that has engaged himself or herself in a sell position transfers any obligations he or she has to make, or take delivery, of the underlying durable good to another buyer.

Not a lot of money is needed to buy or sell a futures contract. As a result of a little money controlling a lot of product, a trader may acquire a large profit or incur a large loss. However, a large profit margin, as well as avoidance of a large loss, is controlled by timely buying and selling of a durable good.

When a trader decides to buy or sell a futures contract, the purchase price declared in the contract becomes locked in for the buyer and the seller. It is well known that future prices may be volatile and thus locking in a price on a good may provide a trader with a substantial amount of profit, as well as a substantial loss.

Durable goods may behave according to a nonlinear value (i.e., not related to use or physical condition) curve. Such a value curve may be exhibited when a particular durable good is in high demand for a specific period of time. When the durable good is in high demand for the specific period of time, the durable may possess a relatively high value. Once the specific period of time has expired the value of the durable good may dramatically decrease so as to exhibit a nonlinear response. For example, a particular good may be in high demand during a holiday season and thus may be valued at a relatively higher price. After the holiday season has passed, the value of the durable good may change considerably regardless the physical conditions of the good.

Similarly, the value of a durable good may behave according to a nonlinear curve based on durability factors. An unexpected new durable good, with similar functionality as a present durable good, may cause the value of the present durable good to decrease because it is relatively less durable than the new durable good. A new aircraft, for example, may provide features and functionality similar to a presently existing aircraft. However, the new aircraft may be designed to be a longer lasting durable good. The durability of the new durable good may force an unexpected decrease in the value of the present durable good.

Purchasing a futures contract for a durable good may be advantageous to traders for it allows the traders to negotiate on a price for the durable good during a present time period for exchange of ownership at a time designated in the future. The ability to negotiate on a durable good price now for a future date may provide the seller and the buyer with assurance in the trading of the durable good. A seller that negotiates a futures contract now may eliminate any risks (e.g., an inability to sell the good at a desired price) involved with owning the durable good at a future date. Likewise, the buyer negotiating at the other end of the futures contract may be able to negotiate a more appealing buying price for the durable good now than in the future since he or she is providing the seller with a promise to take ownership of the durable good at a future point in time. The futures contract provides a convenience for sellers and buyers who don't plan on owning a good for more than a few years.

In another embodiment, the present invention may provide an option market trading interface or a forward market trading interface to allow a trader (i.e., a buyer or a seller) to buy and sell an option contract for a durable good or a forward contract for a durable good, respectively. An option contract in the present invention may provide a trader with an opportunity to establish a right, not an obligation, to buy (i.e., a call option) or sell (i.e., a put option) a durable good.

A forward contract in the present invention, similar to a futures contract, may provide a trader with an opportunity to establish a contract obligating the trader to buy or sell a durable good at a future point in time. Unlike the futures contract, the forward contract is privately negotiated.

In addition to durable goods, the futures market trading interface, the option market trading interface, and the forward market trading interface may each provide the trader with an opportunity to buy or sell real property. Real property is any piece of land, including any buildings or structures that reside on the land. For example, a trader may establish a real property futures contract.

However, for the purposes of clarity and brevity, and not by way of limitation, the system and methods herein are demonstrated primarily in the context of automobile durable good futures contracts. Although any applicable contract and durable good, or contract and real property, may be incorporated in the present invention.

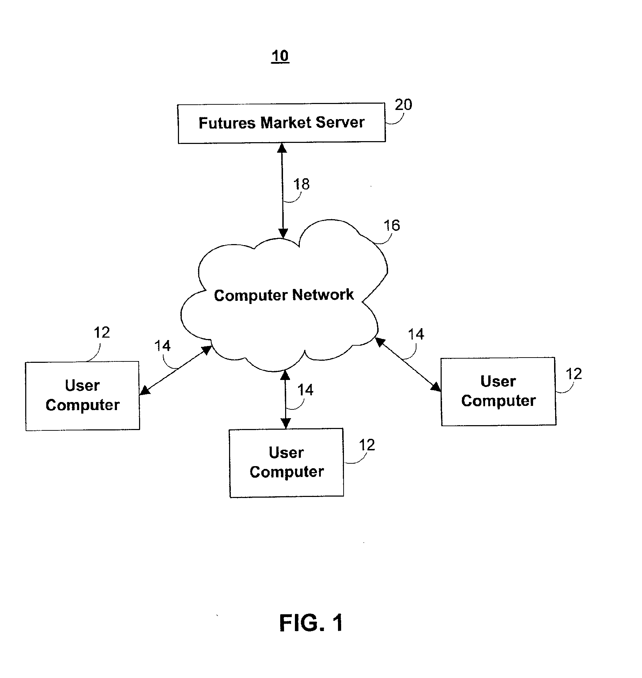

An illustrative system 10 for selling and buying durable goods is shown in FIG. 1. As illustrated, system 10 may include one or more user computers 12 that are connected by one or more communication links 14 to a computer network 16 that is linked via a communication link 18 to a futures market server 20.

In system 10, futures market server 20 may be any suitable server, processor, computer, or data processing device, or combination of the same. Computer network 16 may be any suitable computer network including the Internet, an Intranet, a wide-area network (WAN), a local-area network (LAN), a wireless network, a digital subscriber line (DSL) network, a frame relay network, an asynchronous transfer mode (ATM) network, a virtual private network (VPN), or any combination of any of the same. Communication links 14 and 18 may be any suitable communication links suitable for communicating data between computers 12 and server 20, such as network links, dial-up links, wireless links, hard-wired links, etc. User computers 12 may be any suitable computers, processors, computer terminals, displays, portable computers, personal digital assistants, or any other suitable data processing devices, or combinations of the same.

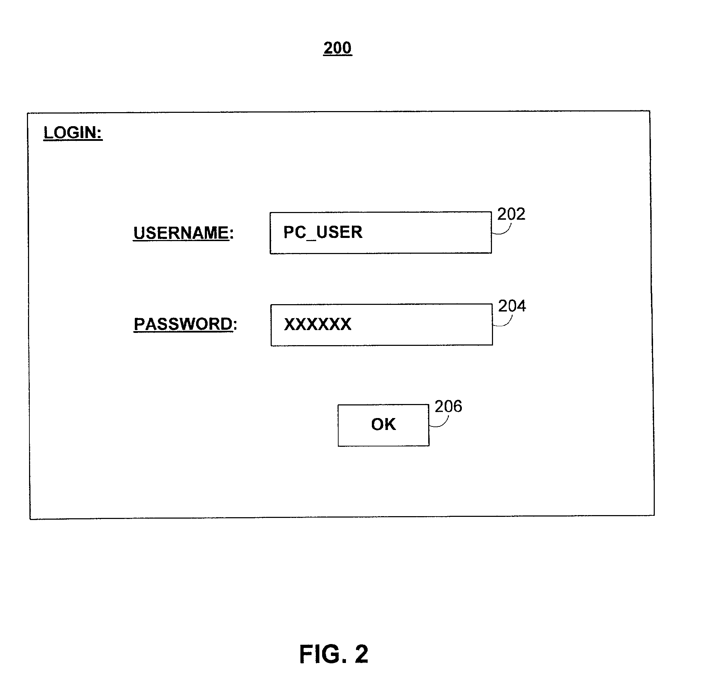

FIGS. 2-8 are illustrative examples of trading interface display screens that may be presented in certain embodiments of the present invention. It should be noted that the display screens presented here are only for illustrative purposes and various features, within the scope of the invention, may be added to or removed from the display screens. Furthermore, for the purpose of clarity, and not by way of limitation, the displays, techniques, or methods herein are demonstrated primarily in the context of automobile durable goods. The present invention may be used with a boat, a plane, household appliances, any other suitable durable good with a designed purpose of being used repeatedly over a period of years, or real property.

Login display screen 200 of FIG. 2 may be provided to a trader on user computer 12. Display screen 200 may request username 202 and password 204 from the trader in order to verify access to a trading account. Once the trader has provided the information requested, the trader may select "Ok" option 206 to continue with the login process.

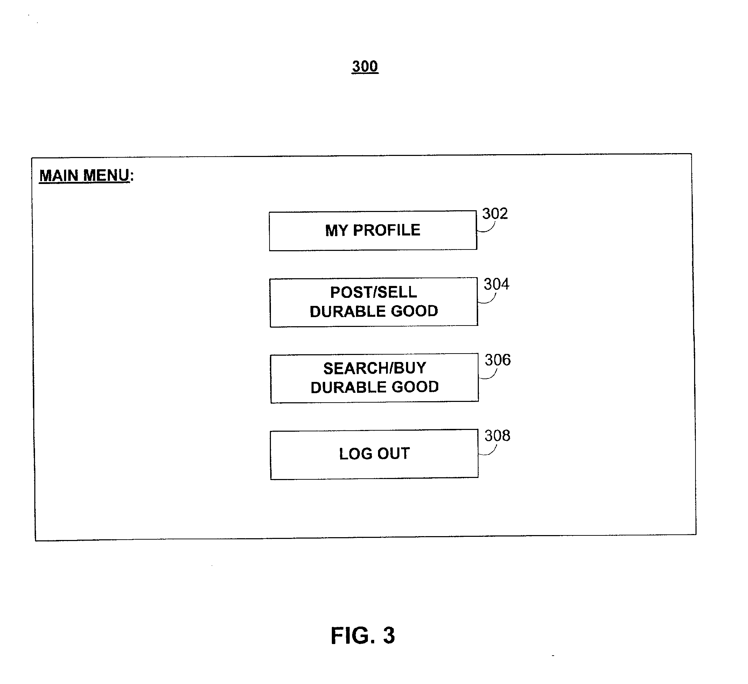

Upon logging into the account, the trader may be provided with main menu display screen 300 as shown in FIG. 3. Display screen 300 may provide the trader with "My Profile" option 302, "Post/Sell Durable Good" option 304, "Search/Buy Durable Good" option 306, and "Log Out" option 308. Option 302, when selected, may provide the trader with a display listing of his or her current futures contracts. Trader account information (e.g., a home mailing address, a home and work phone number, an e-mail address, or any other applicable information) may be incorporated within option 302.

In another embodiment, a trader's durable good interests may be stored using option 302. A remote server, such as futures market server 20, may poll the trader account to collect information on the trader's interests. The remote server may then utilize the collected information to inform (e.g., via e-mail) the trader of available futures contracts relevant to the trader's interests.

Option 304 may allow a trader, acting as a seller, to post a durable good futures contract. When option 304 is selected, for example, a display screen may be made available for collecting information for the durable good to be posted. Option 306 may provide a trader, acting as a buyer, with an ability to search for a durable good futures contract. A display, for example, may be provided to the buyer for collecting searching parameters for the durable good of interest. In one embodiment, a search engine may be incorporated in the display provided by selecting option 306. Option 308 may allow a trader to log off his or her account.

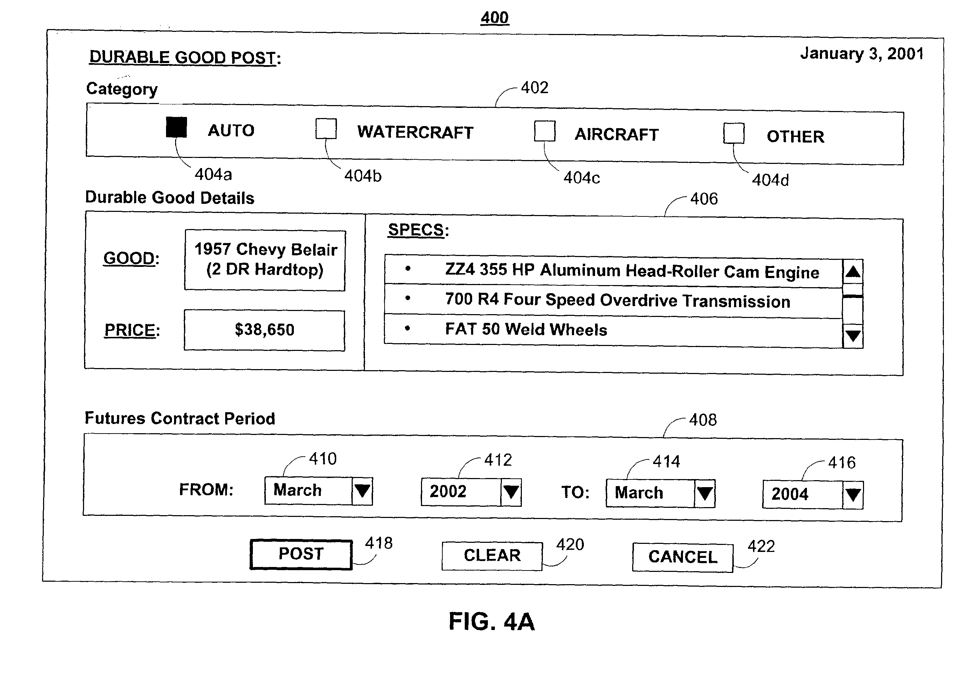

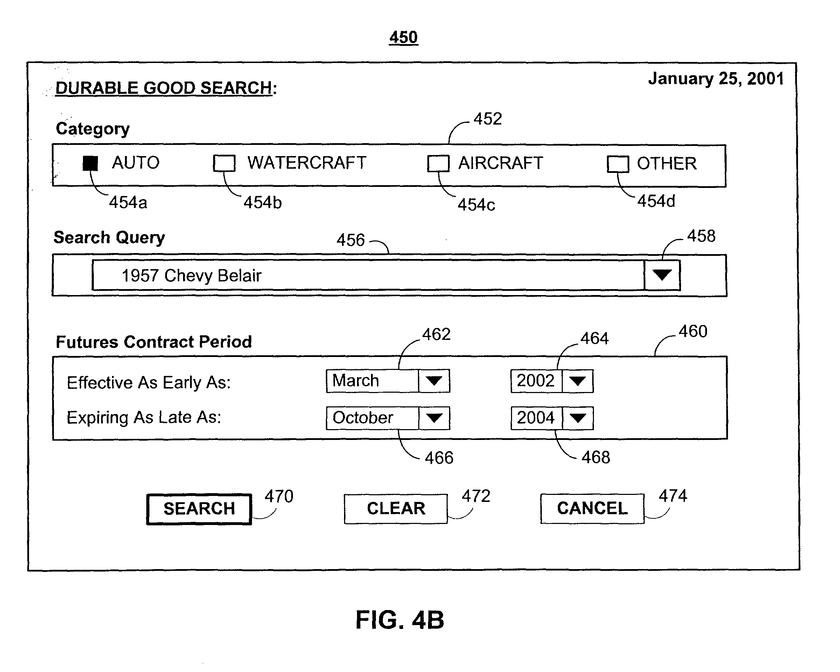

FIGS. 4A and 4B show illustrative displays for conducting a search for a durable good futures contract and posting a durable good futures contract, respectively. FIG. 4A is an illustrative example of durable goods post display screen 400 which may be provided when the seller selects option 304 of FIG. 3. Display screen 400 may provide category field 402, information field 406, and post period field 408. Category field 402 may allow the seller to select a durable good category to associate his or her durable good with. Field 402, for example, may incorporate categories such as "Auto" category 404a, "Water craft" category 404b, "Aircraft" category 404c, and "Other" category 404d.

Specification field 406 may be provided to the seller for collecting durable good information. For example, field 406 may incorporate information such as the name of the durable good, the seller's desired price for the durable good, a detailed specification of the durable good, and any other applicable information that may be relevant in selling the durable good.

Post period field 408 may allow the seller of the durable good to specify a futures contract ownership period for his or her durable good. Field 408 may include drop down menus 410 and 412 so that the seller may select a month and a year, respectively, for when transfer of ownership of the durable good will be available. Similarly, drop down menus 414 and 416 may be provided in field 408 so that the seller may select a month and a year, respectively, for the expiration of the futures contract. When the seller has provided the durable good information, he or she may select "Post" option 418 to submit the durable good futures contract into the trading environment to be viewed by potential buyers searching for that particular durable good. For example, when a seller selects option 418, a durable good futures contract may be established and stored at futures market server 20 of FIG. 1 where the potential buyers may access the futures contract via user computer 12. "Clear" option 420 may allow a seller to clear all the post fields and define a new posting, while "Cancel" option 422 may allow a seller to return to main menu 300.

FIG. 4B is an illustrative example of durable goods search display screen 450 which may be provided when a trader (i.e., a buyer) selects option 306 of FIG. 3. Display screen 450 may provide category field 452, search query field 456, and search period field 460. Category field 452 may allow the buyer to select a durable good category to conduct his or her search in. Field 452, similar to field 402 of FIG. 4A, may incorporate categories such as "Auto" category 454a, "Water craft" category 454b, "Aircraft" category 454c, and "Other" category 454d. For example, the buyer may narrow his or her search to just automobiles by selecting "Auto" category 454a.

Search query field 456 allows the buyer to further narrow a durable good search by allowing the buyer to enter a specific durable good of interest. For example, a buyer may request a search for a specific classic automobile, such as a 1957 Chevy Belair. Field 456 may incorporate menu tab 458. Tab 458, when selected, may provide a drop down menu of previously searched durable goods.

Search period field 460 may provide the buyer with an ability to designate a period of time for which a durable good futures contract is available. Field 460 may include drop down menus 462 and 464 so that the buyer may select a month and a year, respectively, for the earliest effective date of a futures contract. Likewise, drop down menus 466 and 468 may be provided in field 460 so that the buyer may select a month and a year, respectively, for the latest expiration date of the futures contract. Upon designating search parameters in field 452, field 456, and field 460, the buyer may select "Search" option 470 to execute a search satisfying the parameters. "Clear" option 472 may allow a buyer to clear all the search parameters defined in the fields. "Cancel" option 474 may allow a buyer to return to main menu 300.

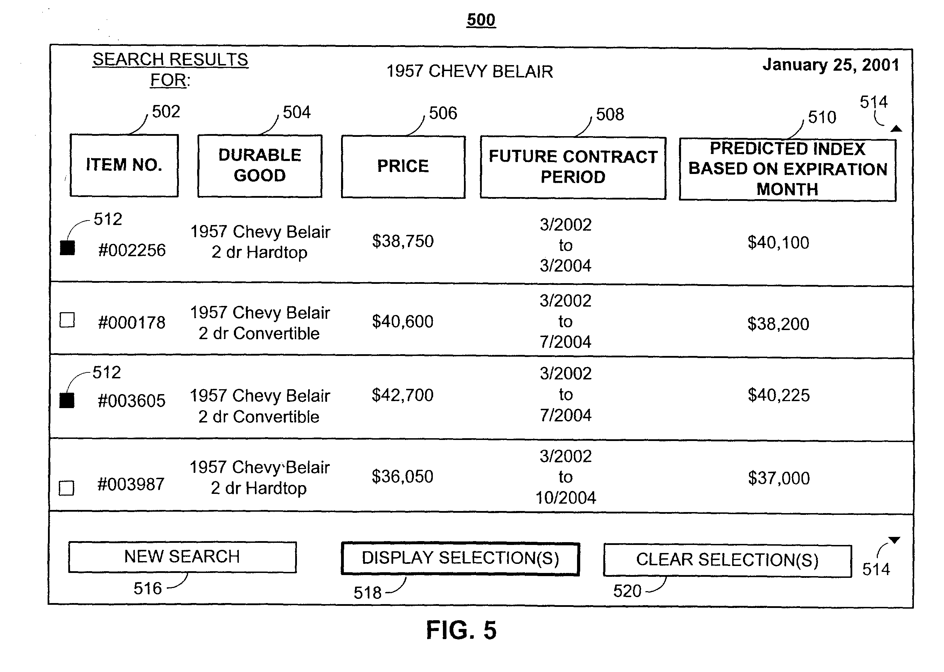

Display screen 500 of FIG. 5 may be provided to the buyer if the search executed in FIG. 4B yields any results. Display screen 500 may provide "Item No." column 502, "Durable Good" column 504, "Price" column 506, "Future Contract Period" column 508, and "Predicted Index Based on Expiration Month" column 510. Column 502 may be provided to uniquely identify item numbers associated with listed search results for a durable good. Column 504 may identify the durable good name linked to the unique item number listing under category 502. The seller's price for the listed durable good results may be provided under column 506. Each of the items listed in display screen 500 may specify the period of availability for the futures contract under column 508. Based on the expiration date specified in column 508, a predicted index (i.e., future market price value) of a durable good may be provided under column 510. The predicted index in column 510 may be determined by, for example, demand for the durable good, current market conditions in the durable good category, or any other factor that may directly or indirectly affect the price value of the durable good.

Display screen 500 may provide the buyer with all the futures contracts available, based on the durable good specified search parameters defined, for example, in fields 452, 456, and 460 of FIG. 4B. Using scroll arrow keys 514, the buyer may review all the available search results. Multiple durable goods may be selected for comparison. A buyer may choose to view a more detailed description of listed durable goods by first selecting tabs 512 associated with the durable goods. After the selections have been made, the buyer may select "Display Selection(s)" option 518 to view his or her durable good selections. "Clear Selection(s)" option 520 may be selected if the buyer chooses to clear the durable good selections he or she has made. The buyer may also choose to conduct a completely new search by selecting "New Search" option 516.

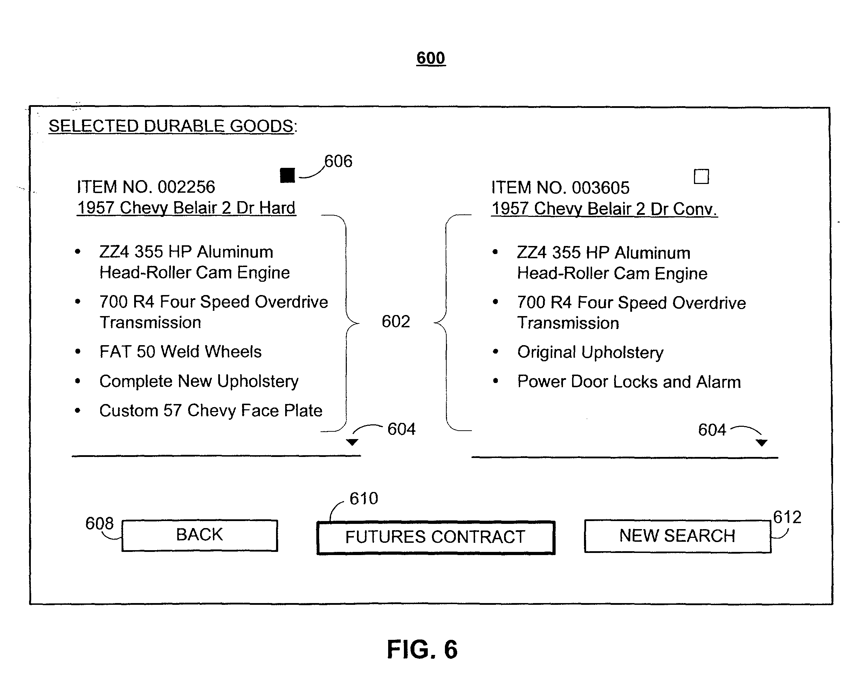

When "Display Selection(s)" option 518 is selected, display screen 600 of FIG. 6 may be provided to the buyer. Display screen 600 allows the buyer to view his or her durable good selections. Detailed descriptions of the durable goods may be provided in displays 602. The buyer may scroll through the descriptions by using scroll arrow keys 604. If the buyer is interested in establishing a futures contract on one or more of the displayed durable goods, the buyer may do so by first selecting tab 606 and then selecting "Futures Contract" option 610. If a buyer wishes to return to the listed results provided on display screen 500 of FIG. 5, the buyer may do so by selecting "Back" option 608. If a buyer selects "New Search" option 612, the trade may be provided with a search screen (e.g., display screen 450 of FIG. 4B) to conduct a new durable good search.

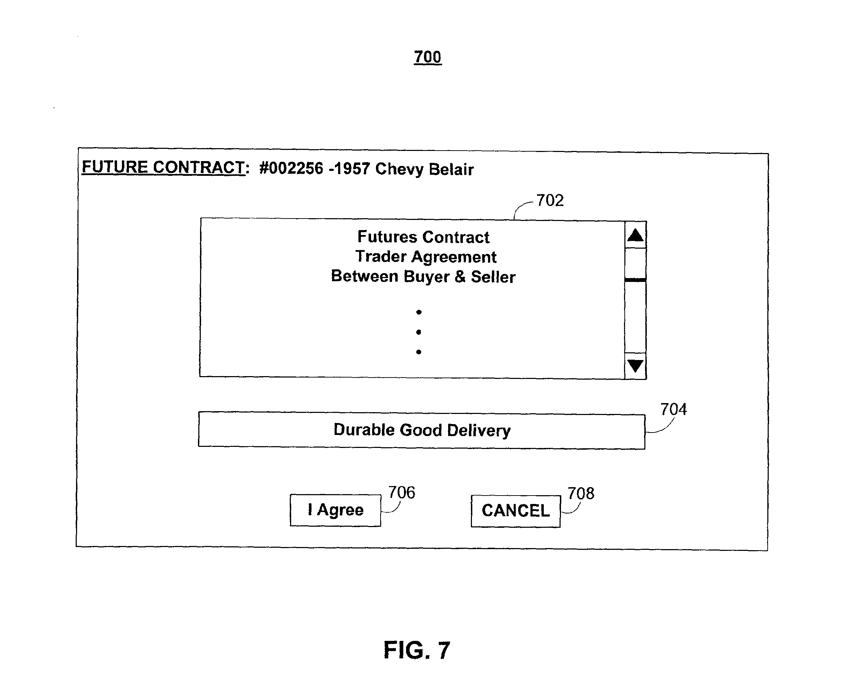

Display screen 700 of FIG. 7 may be displayed when the buyer has selected "Futures Contract" option 610. Display screen 700 may incorporate trader agreement display 702 and delivery option 704. Display 702 may provide the buyer with the terms of a futures contract for the selected durable good. For example, display 702 may provide information about rules and risks associated with engaging in a futures contract, terms of the specific durable good futures contract, and any other information that may be applicable in establishing a durable good futures contract.

Delivery option 704 may also be provided in display screen 700. Option 704 may address liquidated damages resulting from a breach of contract. For example, when option 704 is selected, penalty fee information may be displayed to the buyer. The penalty fees listed may correspond to the extent of liquidated damages on the durable good. Furthermore, option 704 may provide information and options pertaining to the delivery (i.e., acceptable conditions) of the durable good upon expiration of the futures contract. Once the buyer has reviewed the terms and conditions of the durable good futures contract, he or she may select "I Agree" option 706 to establish the futures contract. If the buyer chooses not to engage in the futures contract he or she may select "Cancel" option 708.

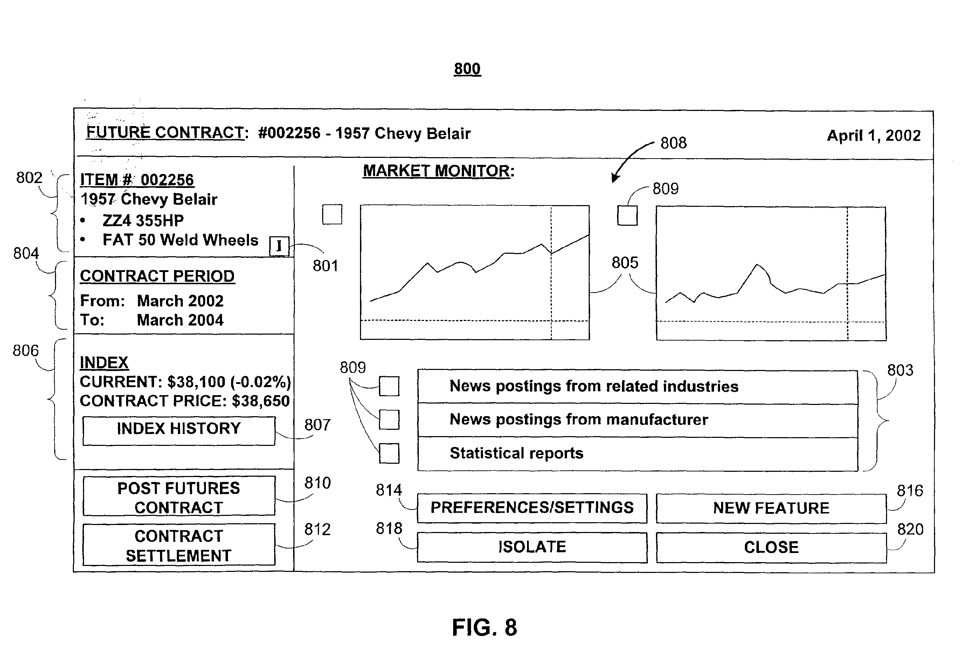

Display screen 800 of FIG. 8 is an illustrative example of a durable good futures contract control panel. Display screen 800 may be accessed when a buyer, for example, selects option 302 of FIG. 3 to view a listing of his or her durable good futures contracts. When the buyer makes a selection, he or she may be provided with the control panel. The control panel of display screen 800 may incorporate durable good identification field 802, contract period field 804, and index field 806. Field 802 may provide a short description of the durable good that was selected. A more detailed description of the durable good may be viewed by selecting option 801 in field 802. Field 804 may display the effective contract period for the durable good.

Field 806 may provide a buyer with the current index of his or her durable good investment. The current index provides the buyer with the current market price value of his or her durable good. The current index may be determined by current market conditions, calculation rules in the futures market, or any other factor that may contribute to a change in the current market price value of the durable good. In addition, field 806 may provide the buyer with the futures contract price at which he or she purchased the durable good. Option 807, when selected, may provide the buyer with a listing of previous index values for the durable good.

Display screen 800 may also incorporate futures market features pertaining to the durable good. Market monitor field 808 may provide a buyer with features such as market performance displays 805 and information links 803. In one embodiment, the features provided in field 808 may be default features. For example, the trading interface may automatically associate features directly related to the durable good.

In another embodiment, the features provided in field 808 may be configured by a buyer. The buyer may be provided with an ability to adjust the settings in the trading interface in order to customize the market features provided every time a particular durable good futures contract is accessed. For example, the buyer may adjust settings for performance displays 805 by selecting "Preferences/Settings" option 814. Upon selecting option 814, the trading interface may provide the buyer with an ability to specify which market performance displays 805 to associate with the durable good futures contract currently being displayed in display screen 800. Similar to customizing performance displays 805, the buyer may specify which information links 803 to associate with the durable good futures contract being displayed. For example, a buyer may specify various information links 803 for a durable good, such as a 1957 Chevy Belair, to be incorporated in field 808. The buyer may want to incorporate a link for news postings from automobile industries, a link for news postings from automobile manufacturers, a link for automobile statistical reports, or any other link the buyer may find applicable to the performance of his or her 1957 Chevy Belair. Information links may provide simple and efficient access to crucial futures market information.

Field 808 may include "New Feature" option 816. When a buyer selects option 816, the trading interface may provide the buyer with an ability to access an additional market feature. The buyer may use option 816 when he or she does not wish to incorporate the additional market feature into a customized field 808. Option 816 may be used, for example, when a buyer wishes to evaluate market information not directly related to his or her durable good.

The trading interface may also provide a buyer with an ability to narrow and evaluate specific durable good features provided in field 808. For example, the buyer may eliminate irrelevant performance displays 805 and information links 803 provided in field 808 by first indicating in selection tabs 809 the preferred displays and links and then selecting "Isolate" option 818. When option 818 is selected the monitor may refresh to provide only the selected displays and links in field 808.

A buyer may choose to close the control panel for the futures contract being provided in display screen 800 and open a new futures contract in the control panel of display screen 800. In order to do so, the buyer may select "Close Contract" option 820. Option 820, when selected, may allow the buyer to close down the control panel for the current durable good futures contract being displayed. When the control panel is closed the buyer may be returned to a display listing (e.g., similar to the listing that may be provided by selecting option 302 of FIG. 3) of his or her durable good futures contracts. The buyer may then select another durable good futures contract to view in the control panel of display screen 800.

Market monitor 808 provides a buyer with the capability to efficiently monitor relevant market activity that may affect his or her durable good futures contract. Drastic changes in market activity may prompt a buyer to act on his or her futures contract in order to avoid financial losses. For example, displays 805 or links 803 may consistently provide strong indications in a loss of future value for the 1957 Chevy Belair the buyer has contracted in. Accordingly, the buyer may choose to post a futures contract on his or her automobile in order to lock-in a desirable price value for the automobile and effectively offset his or her current contract before expiration. The buyer may accomplish this task by selecting "Post Futures Contract" option 810 from display screen 800. Option 810 may provide a posting screen similar to that of display screen 400 of FIG. 4A. Through the posting screen, the buyer, now taking on the role of a seller, may provide information necessary in setting up a futures contract and posting its availability to potential buyers. Information provided by the seller for a futures contract may be transferred to futures market server 20. Buyers accessing futures market server 20 may then search and view the futures contract via user computers 12.

Another option may be made available on display 800 to a buyer engaged in a futures contract. A buyer may modify delivery of his or her durable good upon expiration of the futures contract by using "Contract Settlement" option 812. Option 812, when selected, may provide the buyer with a list of options for settling the expired futures contract. For example, a buyer may choose to settle his or her futures contract through a cash payment. Other options may also be made available to a buyer such as delivery of the durable good against cash for settlement on the expiration date.

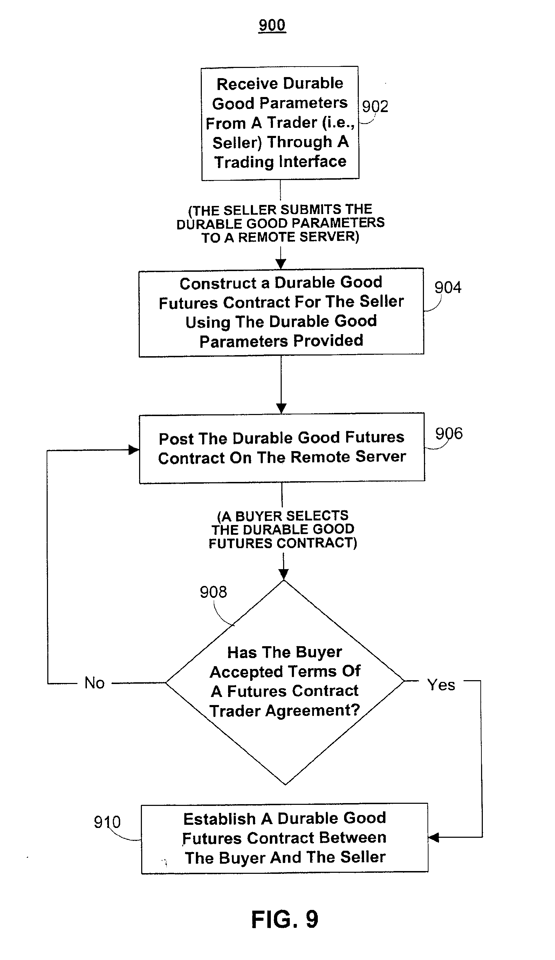

A process for selling a durable good futures contract in accordance with the invention is shown in FIG. 9. As illustrated, at step 902, process 900 may initially receive durable good parameters from a seller through a trading interface. Any suitable trading interface may be used (e.g., the trading interface illustrated in FIG. 4A). Once the seller has provided the durable good parameters requested by the trading interface, the seller may then submit the parameters to a remote server. For example, the seller may select option 418 of FIG. 4A to submit the durable good parameters to futures market server 20. Next, at step 904, process 900 may construct a durable good futures contract for the seller based on the durable good parameters provided. Then at step 906, the durable good futures contract may be posted on the remote server. Once the futures contact has been posted, the futures contract may be made available to all potential buyers conducting a search for a durable good satisfying the parameters defined in the posted futures contract. A buyer may then select the durable good futures contract. If the buyer accepts the terms of a futures contract trader agreement, at step 908, then a durable good futures contract may be established between the buyer and the seller. Yet, if no buyer accepts the terms of the futures contract, the futures contract will continue to be posted on the remote server at step 906.

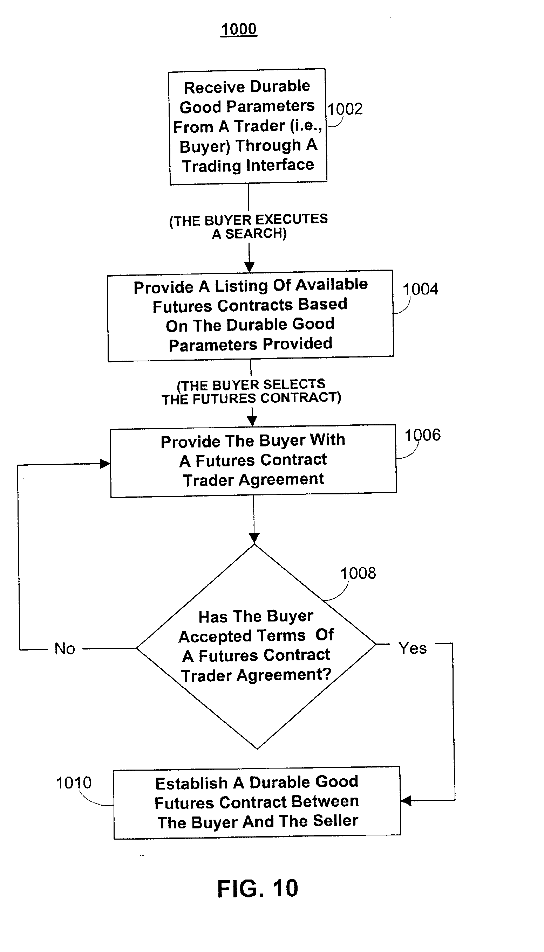

A process for buying a durable good futures contract in accordance with the invention is shown in FIG. 10. As illustrated, at step 1002, process 1000 may initially receive durable good parameters from a buyer through a trading interface. Any suitable trading interface may be used (e.g., the trading interface illustrated in FIG. 4B). The buyer may then execute a search for a durable good satisfying his or her parameters. For example, the buyer may select option 470 of FIG. 4B to conduct a search of available durable good futures contracts posted at futures market server 20 satisfying the provided durable good parameters. At step 1004, process 1000 may provide a listing of available futures contracts based on the durable good parameters provided. The buyer may then select one of the listed futures contracts. When the buyer selects a futures contract, he or she may be provided with a futures contract trader agreement at step 1006. If the buyer accepts the terms of the agreement, at step 1008, then a durable good futures contract is established between the buyer and seller of the durable good. If the buyer chooses not to engage in the selected futures contract, he or she may then be provided with the listing of available futures contracts at step 1004.

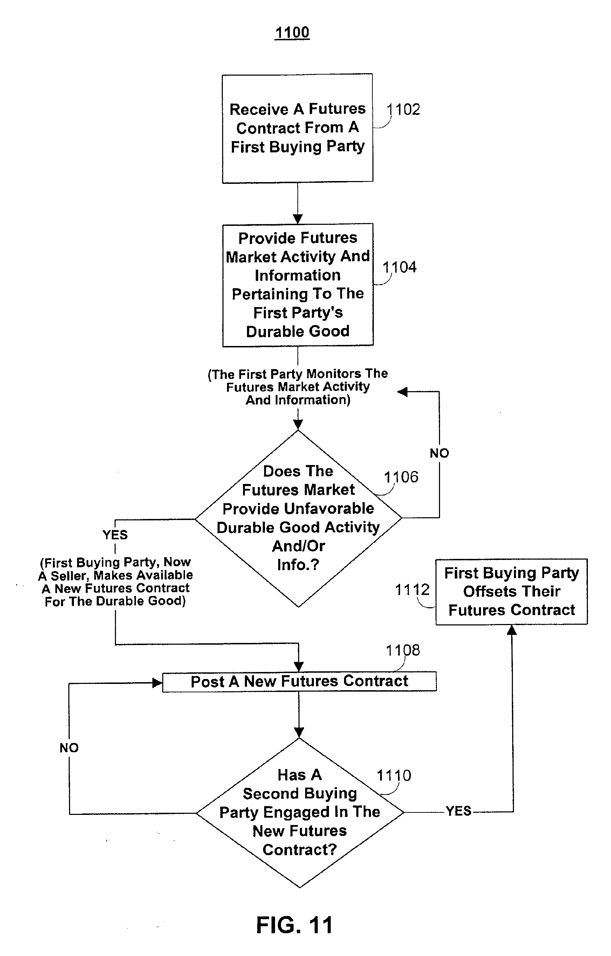

A process 1100 for buying and selling a futures contract in accordance with one embodiment of the present invention is shown in FIG. 11. As illustrated, at step 1102, process 1100 receives a request from a first buying party to enter a selected durable good futures contract. Once the buying party has established the durable good futures contract, the futures market trading interface may provide information relevant to the durable good at step 1104. For example, the information provided by the trading interface may be the performance displays 805 and the information links 803 as illustrated in market monitor 808 of FIG. 8.

A variety of situations may prompt the first buying party to post a futures contract on his or her durable good. For example, the first buying party may choose to establish a futures contract as a result of 5 knowing that he or she does not plan on maintaining the durable good for a prolonged period of time and would like to be assured the ability of selling the good in the future for a desirable price. Another reason the first buying party may want to establish a futures contract is that he or she foresees a possible financial loss in maintaining ownership of the durable good for more than a few years. Process 1100 may allow the first buying party to continue monitoring his or her futures contract to check for unfavorable market activity, as shown at step 1106. If no unfavorable market activity has occurred, the first buying party may continue monitoring the market activity information. Although, if unfavorable market activity presents itself to the first buying party at step 1106 (e.g., news postings provided by information links 803 of FIG. 8), the first buying party may choose to post a futures contract to be made available to a second buying party. At step 1108, the first buying party, now taking on the role of a seller, may submit requested parameters for the durable good to be posted in a new futures contract. The parameters may be transmitted from the trading interface on user computer 12 to futures market server 20.

Once the parameters have been received and a new futures contract has been constructed, any interested buying party may view the durable good. At step 1110, a check may be made to see if a second buying party has expressed an interest and engaged in the new futures contract. If not, process 1100 may continue to provide a posting of the new futures contract. If a second buying party has engaged in the new futures contract, process 1100 may proceed to step 1112 where the first buying party's futures contract is offset by the second buying party. Offsetting the first buying party's futures contract relieves the first buying party from any further obligations he or she has to make or take delivery of the underlying durable good.

It should be obvious to one of ordinary skill in the art that the present invention may be practiced in embodiments other than those illustrated herein without departing from the spirit and scope of the present invention, and that the invention is only limited by the claims which follow.

## Claims

1. A system for selling a durable good futures contract, comprising:
a user computer configured to provide a futures market trading interface for receiving durable good parameters from a seller;
a futures market server configured to construct the durable good futures contract based on the durable good parameters provided by the seller;
the futures market server configured to post the durable good futures contract; and
the futures market server configured to determine if a buyer has accepted a futures contract trader agreement.

2. The system defined in claim 1 wherein the selling the durable good futures contract comprises selling a durable good selected from the group consisting of an automobile, a water craft, an aircraft, and a home appliance.

3. The system defined in claim 1 wherein the user computer configured to provide a futures market trading interface for receiving durable good parameters from a seller is further configured to receive durable good parameters related to a category field, a durable good details field, and a future contract period field.

4. The system defined in claim 3 wherein the user computer configured to receive durable good parameters related to the category field provides the seller with an ability to designate of one of the following categories for the durable good: an automobile, a water craft, an aircraft, and a home appliance.

5. The system defined in claim 3 wherein the user computer configured to receive durable good parameters related to the details field provides the seller with an ability to define a name for the durable good, a price for the durable good, and specifications for the durable good.

6. The system defined in claim 3 wherein the user computer configured to receive durable good parameters related to the futures contract period field provides the seller with an ability to define a transfer of ownership date and an expiration date.

7. The system defined in claim 6. wherein the transfer of ownership date indicates the date the buyer takes ownership of the durable good from the seller.

8. The system defined in claim 6 wherein the expiration date indicates the date the buyer's futures contract expires.

9. A system for buying a durable good futures contract, comprising:
a user computer configured to provide a futures market trading interface for receiving durable good parameters from a buyer;
a futures market server configured to search durable good futures contracts based on the durable good parameters provided by the buyer;
the futures market server configured to list available durable good futures contracts based on the durable good parameters provided by the buyer; and
the futures market server configured to provide the buyer with a futures contract trader agreement when the durable good futures contract is selected.

10. The system defined in claim 9 wherein the buying the durable good futures contract comprises buying a durable good selected from the group consisting of an automobile, a water craft, an aircraft, and a home appliance.

11. The system defined in claim 9 wherein the user computer configured to provide a futures market trading interface for receiving durable good parameters is further configured to receive durable good parameters related to a category field, a search query field, and a futures contract period field.

12. The system defined in claim 11 wherein the user computer configured to receive durable good parameters related to the category field provides the buyer with an ability to designate of one of the following categories for the durable good: an automobile, a water craft, an aircraft, and a home appliance.

13. The system defined in claim 11 wherein the user computer configured to receive durable good parameters related to the search query field provides the buyer with an ability to define durable good terms.

14. The system defined in claim 13 wherein the durable good terms are any terms found in a durable good name.

15. The system defined in claim 13 wherein the durable good terms are any terms found in a durable good specification.

16. The system defined in claim 11 wherein the user computer configured to receive durable good parameters related to the futures contract period field provides the buyer with an ability to define a futures contract effective date and a futures contract expiration date.

17. The system defined in claim 16 wherein the futures contract effective date indicates the earliest date the buyer is willing to take transfer of ownership of the durable good from a seller.

18. The system defined in claim 16 wherein the futures contract expiration date indicates the latest date the buyer is willing to hold a futures contract to its expiration.

19. The system defined in claim 9 wherein the futures market server configured to list available durable good futures contracts is further configured to list an identification of the durable good futures contract, identification of the durable good, a seller's price of the durable good, a seller's futures contract period, and a predicted index based on the expiration date of the futures contract.

20. The system defined in claim 19 wherein the futures market server configured to list the seller's futures contract period lists a transfer of ownership date and a expiration date.

21. The system defined in claim 19 wherein the futures market server is further configured to determine factors selected from the group consisting of demand for the durable good, market conditions for the durable good, and a combination thereof when listing the predicted index based on the expiration date.

22. A system for monitoring a durable good futures contract, comprising:
a user computer configured to provide a futures market trading interface for providing information relating to the durable good futures contract;
the user computer configured to provide the futures market trading interface for providing market activity pertaining to a durable good in the durable good futures contract; and
the user computer configured to provide the futures market trading interface for providing control options for the durable good futures contract.

23. The system defined in claim 22 wherein the user computer configured to provide a futures market trading interface for providing information relating to the durable good futures contract is further configured to provide an identification field, a futures contract period field, and an index field.

24. The system defined in claim 23 wherein the user computer configured to provide the identification field provides identification of the durable good futures contract.

25. The system defined in claim 23 wherein the user computer configured to provide the futures contract period field provides a transfer of ownership date and an expiration date.

26. The system defined in claim 25 wherein the transfer of ownership date indicates the date a buyer took ownership of the durable good from a seller.

27. The system defined in claim 25 wherein the expiration date indicates the date the buyer's durable good futures contract expires.

28. The system defined in claim 23 wherein the user computer configured to provide the index field provides a current indexed price of the durable good and a futures contract price at which the durable good futures contract was purchased.

29. The system defined in claim 28 wherein the user computer is further configured to determine factors selected from the group consisting of demand for the durable good, market conditions for the durable good, and a combination thereof when providing the current indexed price.

30. The system defined in claim 22 wherein the user computer configured to provide the futures market trading interface for providing market activity is further configured to provide performance displays and information links.

31. The system defined in claim 30 wherein the user computer configured to provide performance displays and information links provides default performance displays and default information links.

32. The system defined in claim 30 wherein the user computer configured to provide performance displays and information links provides customized performance displays and customized information links.

33. The system defined in claim 32 wherein the customized performance displays and the customized information links are associated with the durable good futures contract being displayed on the trading interface.

34. The system defined in claim 22 wherein the user computer configured to provide the futures market trading interface for providing control options for the durable good futures contract is further configured to provide a post futures contract option and a contract settlement option.

35. The system defined in claim 34 wherein the user computer configured to provide the post futures contract option provides the buyer with an ability to establish a new durable good futures contract with another buyer.

36. The system defined in claim 34 wherein the user computer configured to provide the contract settlement option provides various options in settling a durable goods futures contract upon expiration.
